# EUROPÄISCHE PATENTSCHRIFT

(11) **EP 3 459 343 B1**
(45) Veröffentlichungstag und Bekanntmachung des Hinweises auf die Patenterteilung: **08.09.2021**
(21) Anmeldenummer: 18183602.4
(22) Anmeldetag: 16.07.2018
(51) Int. Cl.: A01F 15/08

(54) **RIEMENSPANNSYSTEM FÜR EINE RUNDBALLENPRESSE SOWIE LANDWIRTSCHAFTLICHE RUNDBALLENPRESSE**
BELT TENSIONING SYSTEM FOR A ROUND BALER AND AGRICULTURAL ROUND BALER
SYSTÈME DE TENSION DE COURROIE POUR UNE PRESSE À BALLES RONDES AINSI QU'UNE PRESSE À BALLES RONDES AGRICOLE

(30) Priorität: 26.09.2017 DE 102017122224
(43) Veröffentlichungstag der Anmeldung: 27.03.2019
(73) Patentinhaber: Usines CLAAS France S.A.S, 57140 St. Rémy / Woippy (FR)
(72) Erfinder: Arnould, Cyrille, 57645 Montoy-Flanville (FR); Rongvaux, Laurent, 54800 Tronville (FR)
(74) Vertreter: CLAAS Gruppe

(56) Entgegenhaltungen:
- EP-A1- 1 588 604
- EP-A1- 3 106 024
- WO-A1-2015/160242
- US-A1- 2007 289 454

## Beschreibung

Die vorliegende Erfindung betrifft ein Riemenspannsystem nach dem Oberbegriff von Anspruch 1. Ein solches Riemenspannsystem umfasst eine Mehrzahl von Führungsrollen und einem um die Führungsrollen gelegten, endlosen Pressriemen. Zwecks Spannung des Pressriemens sowie ggf. zur Nachführung innerhalb einer Rundballenpresse im Zuge der Entstehung eines Rundballens verfügt das Riemenspannsystem ferner über eine Spanneinrichtung.

Weiterhin betrifft die vorliegende Anmeldung eine landwirtschaftliche Rundballenpresse gemäß dem abhängigen Anspruch 8. Diese verfügt über eine innerhalb eines Gehäuses aufgespannte bzw. aufspannbare Presskammer, innerhalb derer Erntegut zu einem Rundballen pressbar ist. Hierzu bedient sich die Rundballenpresse eines umlaufenden Pressriemens, der mit einem Riemenspannsystem zusammenwirkt.

Ein Riemenspannsystem der vorstehend beschriebenen Art ist im Stand der Technik bereits bekannt. Hierzu wird beispielhaft auf die US Patentanmeldung 2017/0027107 A1 hingewiesen. Diese beschreibt eine Rundballenpresse, die mit einem Riemenspannsystem ausgestattet ist. Insbesondere wird dabei ein endloser Pressriemen innerhalb eines Innenraums eines Gehäuses der Rundballenpresse fortwährend entlang einer Laufstrecke umlaufend geführt, wobei der Pressriemen entlang eines Teils seiner Laufstrecke eine Presskammer aufspannt. Zu verdichtendes bzw. zu pressendes Erntegut wird mittels einer Führungseinrichtung in diese Presskammer geführt und sodann dort unter anderem aufgrund eines mittels des Pressriemens ausgeübten Drucks verdichtet. Die zylindrische Form des Rundballens ergibt sich aufgrund des sich in Bewegung befindlichen Pressriemens, der über Reibkräfte das Erntegut innerhalb der Presskammer in einer Rotation versetzt, sodass weiteres, sukzessive der Presskammer zugeführtes Erntegut fortwährend gleichmäßig umlaufend eine immer wieder neue äußere Schicht des anwachsenden Rundballens bildet.

Das bekannte Riemenspannsystem umfasst eine Spanneinrichtung, mittels derer es möglich ist, Abstände zwischen Führungsrollen, um die der Pressriemen herum gelegt ist, zu verändern. Hierzu wird die in dem genannten Dokument als Kolben-Zylinder-Einheit ausgebildete Spanneinrichtung an einem Ende mit einem Schwenkarm zusammen, an dem zwei Umlenkrollen angeordnet sind. Diese Umlenkrollen erfüllen die Funktion von "Spannrollen" im Sinne der vorliegenden Anmeldung. Der Schwenkarm ist um eine Schwenkachse verdrehbar gelagert, sodass sich diese Spannrollen im Zuge einer Betätigung der Spanneinrichtung auf einer Kreisbahn um diese Schwenkachse bewegen. Die jeweils gegenüberliegenden Spannrollen, von denen ausgehend sich der Pressriemen hin zu den Spannrollen des Schwenkarms erstreckt, sind derweil ortsfest an dem Gehäuse der Rundballenpresse angeordnet, sodass ein Verschwenken des Schwenkarms zu einer Änderung des Abstandes zwischen den korrespondierenden Spannrollen führt. Aufgrund der konstanten Länge des Pressriemens insgesamt wird beispielsweise mittels einer Vergrößerung des Abstandes zwischen den miteinander korrespondierenden Spannrollen die übrige Laufstrecke des Pressriemens verkürzt, wodurch der Pressriemen "gespannt" wird. Dies hat letztlich zur Folge, dass der Pressriemen, der unmittelbar an dem im Entstehen begriffenen Rundballen anliegt und durch den Rundballen von seiner kürzest möglichen Laufstrecke abgelenkt wird, verstärkt auf die äußere Umfangsfläche des Rundballens drückt damit eine stärkere Verdichtung des Ernteguts bewirken kann.

Das bekannte Riemenspannsystem hat den Nachteil, dass es vergleichsweise komplex aufgebaut ist, insbesondere eine aufwändige Kinematik erfordert, und zudem keine präzise Steuerung der mittels des Pressriemens auf den Rundballen übertragenen Druckkraft erlaubt. Somit steht zwar die Einstellung der Spanneinrichtung in einem Zusammenhang mit der Spannung des Pressriemens; eine genaue und insbesondere vorhersagbare Beziehung, die eine präzise Steuerung der Spannung des Pressriemens erlauben würde, existiert gleichwohl nicht. In Folge dessen ist die Einstellung der Dichte des zu erzeugenden Rundballens nur grob möglich. Weitere Riemenspannsysteme für Rundballenpressen sind aus den folgenden Publikationen bekannt: WO 2015/160242 A1, EP 3 106 024 A1, EP 1 588 604 A1 oder US 2007/289454 A1.

Der vorliegenden Anmeldung liegt mithin die Aufgabe zugrunde, ein Riemenspannsystem sowie eine landwirtschaftliche Rundballenpresse hervorzubringen, mittels dessen die Dichte des jeweils erzeugten Rundballens genauer einstellbar ist, als diesen Stand der Technik möglich ist.

Die zugrunde liegende Aufgabe wird erfindungsgemäß mittels eines Riemenspannsystems mit den Merkmalen des Anspruchs 1 gelöst. Vorteilhafte Ausgestaltungen hierzu ergeben sich aus den Unteransprüchen 2 bis 7.

Da der Pressriemen als solcher in Form eines Endlosriemens ausgeführt ist, versteht es sich, dass er fortwährend auf einer in sich geschlossenen Laufstrecke umlaufen kann. Hierzu ist der Pressriemen um die Führungsrollen gelegt, wobei Laufstreckenabschnitte des Pressriemens, die sich zwischen benachbarten Führungsrollen erstrecken, zumindest im Wesentlichen gerade sind. Die Führungsrollen bewirken eine Umlenkungen für den Pressriemen und bestimmen somit die Kontur bzw. den Verlauf der Laufstrecke.

Bei der "Spanneinrichtung" kann es sich im Sinne der vorliegenden Anmeldung grundsätzlich um jede Art von Einrichtung handeln, die dazu geeignet ist, einen Abstand zwischen zwei benachbarten Führungsrollen zu verändern, sodass sich eine Länge des zwischen diesen Führungsrollen erstreckenden Laufstreckenabschnitts des Pressriemens gleichermaßen verändert. Diese Führungsrollen werden im Sinne der vorliegenden Anmeldung als "Spannrollen" bezeichnet. Da innerhalb des Pressriemens eine Zugkraft wirkt, die typischerweise der Bewegung der Spannrollen voneinander weg entgegensteht, versteht es sich, dass die Spanneinrichtung entsprechend typischerweise mit einer Druckkraft beaufschlagt ist.

Zur Veränderung des Abstandes zwischen den Spannrollen sind diese erfindungsgemäß jeweils an Spannelementen gelagert, die - vorzugsweise unmittelbar - gegeneinander abgestützt sind und auf diese Weise eine in sich geschlossene Spanneinheit bilden. Insoweit unterscheidet sich das erfindungsgemäße Riemenspannsystem von dem Stand der Technik, bei dem zumindest eine Spannrolle an einem Gehäuse einer zugehörigen Rundballenpresse angeordnet ist, wobei ein Kraftfluss zwischen den zugehörigen Spannelementen zumindest teilweise durch das Gehäuse erfolgt. Das Riemenspannsystem gemäß dem Stand der Technik ist mithin nicht "in sich geschlossen" im Sinne der vorliegenden Anmeldung, da ein Kraftfluss mittels externer Bauteile, insbesondere durch das Gehäuse der jeweiligen Rundballenpresse, stattfinden muss. Demgegenüber befindet sich eine "in sich geschlossene Spanneinheit" bezogen auf die Spannwirkung bzw. Spannkräfte in einem äußeren Kräftegleichgewicht, sodass Lagerkräfte der Spanneinheit, beispielsweise an einem Auflager eines Gehäuses einer Rundballenpresse, frei von Einflüssen der Spannkräfte sind.

Die Spannelemente wirken weiterhin erfindungsgemäß, vorzugsweise unmittelbar, jeweils mit der Spanneinrichtung zusammen, sodass ein Kraftfluss zwischen den Spannelementen mittels der Spanneinrichtung möglich ist. Aufgrund der Abstützung der Spannelemente gegeneinander bleibt die so gebildete Spanneinheit unabhängig von der Spannkraft der Spanneinrichtung frei von äußeren Kräften. Mit anderen Worten steht die Spanneinheit in einem äußeren Kräftegleichgewicht, während ein Kraftfluss infolge der Spannkraft lediglich innerhalb der Spanneinheit selbst stattfindet.

Das erfindungsgemäße Riemenspannsystem hat viele Vorteile. Der wesentlichste Vorteil besteht darin, dass die Spanneinheit in dem beschriebenen äußeren Kräftegleichgewicht bleibt, und zwar unabhängig von der Spannkraft der Spanneinrichtung. Dieser Effekt wird dadurch erreicht, dass ein Kraftfluss zwischen den Spannelementen gewissermaßen innerhalb der Spanneinheit stattfindet, ohne dass eine nach außen wirkende Kraft hervorgerufen wird. Je nachdem, wie die Spanneinheit geometrisch konstruiert ist, kann die über die Spanneinrichtung übertragene Spannkraft zumindest im Wesentlichen identisch zu der Summe sämtlicher Zugkräfte ausfallen, die zwischen den Spannelementen bzw. den zugehörigen Spannrollen über den Pressriemen übertragen werden.

Der Vorteil des äußeren Kräftegleichgewichts der Spanneinheit kommt insbesondere in Kombination des Riemenspannsystems mit einer zugehörigen Rundballenpresse zum Tragen. Das Riemenspannsystem kann mittels eines Auflagers an einem Gehäuse einer zugehörigen Rundballenpresse gelagert sein, wobei aufgrund des rein inneren Kraftflusses innerhalb der Spanneinheit das Gehäuse als solches frei von Lagerkräften bleibt, die durch die Spannung des Pressriemens bzw. eine Spannkraft der Spanneinrichtung bedingt sind. Mithin dient das Auflager an der Rundballenpresse lediglich zur Aufnahme statischer Lasten der Spanneinheit als solcher, beispielsweise infolge Eigengewichts, und zur Festlegung einer Position der Spanneinheit innerhalb des Gehäuses.

Ein weiterer Vorteil besteht darin, dass das erfindungsgemäße Riemenspannsystem besonders kompakt ist und somit einen vergleichsweise kleinen Bauraum in dem Gehäuse der zugehörigen Rundballenpresse einnimmt. Aufgrund der Leitung der Kräfte vollständig innerhalb der Spanneinheit ist es zudem bei dem erfindungsgemäßen Riemenspannsystem möglich, eine unmittelbare Relation zwischen der Spannkraft der Spanneinrichtung und der in dem Pressriemen wirkenden Zugkraft bzw. Zugspannung aufzustellen. Auf diese Weise ist es erstmalig möglich, die in dem Pressriemen wirkende Zugspannung präzise sowie unmittelbar über die Spanneinrichtung zu regeln. Mithin erlaubt das erfindungsgemäße Riemenspannsystem, die Dichte eines zu erzeugenden Rundballens genau einzustellen und somit an jeweilige Anforderungen anzupassen.

In einer vorteilhaften Ausgestaltung des erfindungsgemäßen Riemenspannsystems sind die Spannelemente der Spanneinheit sowohl absolut als auch relativ zueinander beweglich. "Absolut beweglich" bedeutet im Sinne der vorliegenden Anmeldung, dass sich die Spannelemente innerhalb des Raumes bewegen können und nicht räumlich festgelegt sind. Die relative Beweglichkeit der Spannelemente zueinander ist zudem gegeben, um den Abstand der Spannrollen zueinander verändern und dadurch einen Einfluss auf die Spannung des Pressriemens nehmen zu können.

Das erfindungsgemäße Riemenpresssystem weiter ausgestaltend sind die Spannelemente jeweils unmittelbar mittels der Spanneinrichtung miteinander verbunden. Insbesondere können ein erstes Ende der Spanneinrichtung mit dem ersten Spannelement und das gegenüberliegende zweite Ende der Spanneinrichtung mit dem zweiten Spannelement verbunden sein. Mittels der Spanneinrichtung ausgeübte Spannkräfte können auf diese Weise unmittelbar einander entgegengesetzt auf die Spannelemente der Spanneinheit wirken. Analog versteht es sich, dass somit auch ein Kraftfluss von dem einen Spannelement zu dem anderen Spannelement direkt durch die Spanneinrichtung erfolgen kann.

In einer vorteilhaften Ausgestaltung des erfindungsgemäßen Riemenspannsystems sind die Spannelemente jeweils in Form von Schwenkarmen ausgebildet, wobei das eine Spannelement unmittelbar unter Ausbildung eines Drehgelenks an dem anderen Spannelement angeschlossen ist. Zudem sind die Spannelemente derart mittels der Spanneinrichtung miteinander gekoppelt, dass eine Relativposition der Spannelemente zueinander mittels der Spanneinrichtung arretierbar ist. Somit ist es insbesondere möglich, mittels eines Betriebs der Spanneinrichtung die Relativposition der Spannelemente zueinander zu verändern und auf diese Weise die an den Spannelementen angeordneten Spannrollen relativ zueinander zu bewegen. Dies geht gemäß obiger Erläuterung unmittelbar mit einer Veränderung der Spannung innerhalb des Pressriemens einher.

Alternativ zu der Ausgestaltung der Spannelemente in Form von Schwenkarmen ist es ferner denkbar, Spannelemente jeweils in Form von Schlitten auszuführen, die in oder an einer Führungseinrichtung angeordnet sind. Insbesondere können solche Schlitten entlang einer Führungsstange oder innerhalb eines Führungskanals geführt werden. Die Spannelemente sind bei dieser Ausführung unmittelbar mittels der Spanneinrichtung miteinander verbunden und relativ zueinander mittels selbiger arretierbar. Die "Spanneinheit" wird bei dieser Ausgestaltung demzufolge von der Gesamtheit aus Spannelementen und Spanneinrichtung gebildet, die gemeinsam mittels der Führungseinrichtung gelagert ist. Eine auf diese Weise ausgebildete Spanneinheit ist besonders einfach regelbar sowie leicht technisch umsetzbar und robust. Vorteilhafterweise sind beide Schlitten, die jeweils mit mindestens einer Spannrolle ausgestattet sind, innerhalb des Führungskanals bewegbar, sodass die Spanneinheit als Ganzes einem Zuge der Entstehung eines Rundballens anwachsenden Durchmesser des Rundballens entlang des Führungskanals bewegt werden kann. Eine solche Ausführung ist insbesondere dann von Vorteil, wenn der Führungskanal an einer Innenwand eines Gehäuses einer Rundballenpresse angeordnet ist.

Bezogen auf die Spannelemente kann es weiterhin von Vorteil sein, wenn mindestens eines derselben über zwei Spannrollen verfügt, die gemeinsam ein Spannrollenpaar bilden. Mittels einer solchen Ausgestaltung ist es besonders einfach möglich, einen jeweiligen Spannriemen ausgehend von der ersten Spannrolle des einen Spannelements zu der Spannrolle des jeweils anderen Spannelements zu führen, dort umzulenken und schließlich zurück zu der zweiten Spannrolle ersten Spannelements zu führen. Ein Abstand zwischen dem Spannrollenpaar des ersten Spannelements und der Spannrolle des zweiten Spannelements entspricht dabei zumindest im Wesentlichen einer Länge eines Laufstreckenabschnitts des Pressriemens zwischen den Spannelementen.

Bezug nehmend auf die Spanneinrichtung kann es von besonderem Vorteil sein, diese in Form einer Kolben-Zylinder-Einheit auszubilden. Die Spanneinrichtung wird im Zuge der Regelung der Spannung innerhalb des Pressriemens typischerweise ausschließlich mit einer Druckkraft beaufschlagt. Eine solche ist mittels einer Kolben-Zylinder-Einheit besonders einfach aufbringbar, wobei insbesondere ein hydraulischer oder pneumatischer Antrieb der Spanneinrichtung denkbar ist. Alternative Antriebsweisen sind selbstverständlich gleichermaßen möglich.

Die dieser Anmeldung zugrunde liegende Aufgabe wird ferner mittels einer landwirtschaftlichen Rundballenpresse mit den Merkmalen des Anspruchs 8 gelöst. Vorteilhafte Ausgestaltung hierzu sind den Unteransprüchen 9 bis 11 entnehmbar.

Die erfindungsgemäße Rundballenpresse verfügt über ein Gehäuse sowie eine Zuführeinrichtung, mittels derer Erntegut in einen Innenraum des Gehäuses leitbar ist. Ferner erstreckt sich eine Mehrzahl von Führungsrollen in eine Querrichtung der Rundballenpresse innerhalb des Gehäuses, wobei mittels der Führungsrollen ein zugehöriger Pressriemen führbar ist. Die Führungsrollen sind in aller Regel parallel zueinander ausgerichtet, erstrecken sich zwischen einander gegenüberliegenden Seitenwänden der Rundballenpresse und sind dort ortsfest gelagert.

Erfindungsgemäß ist die Rundballenpresse mit einer Spanneinheit ausgestattet, die an dem Gehäuse gelagert ist, beispielsweise an einem Auflager an einer Wandung des Gehäuses. Wie bereits vorstehend im Zusammenhang mit dem erfindungsgemäßen Riemenspannsystem beschrieben, umfasst die Spanneinheit zwei gegeneinander abgestützte Spannelemente, die jeweils mindestens eine Führungsrolle in Form einer Spannrolle aufweisen. Die Spanneinheit ist dabei so ausgebildet, dass sie als solche unabhängig von der Spannkraft der Spanneinrichtung in einem äußeren Kräftegleichgewicht steht. Dies hat zur Folge, dass ausgehend von der Spanneinheit keine durch die Spanneinrichtung bewirkten Spannkräfte in das Gehäuse der Rundballenpresse eingeleitet werden. Das Gehäuse bleibt mithin frei von entsprechend bedingten Lagerkräften und dient mithin lediglich zur Halterung der Spanneinheit als solcher.

Die sich bei der erfindungsgemäßen Rundballenpresse ergebenden Vorteile sind vorstehend bereits im Zusammenhang mit dem erfindungsgemäßen Riemenspannsystem beschrieben. Neben der kompakten Ausführung der Spanneinheit innerhalb der Rundballenpresse sowie der Freiheit des Gehäuses von Spannkräften der Spanneinrichtung ist dabei insbesondere die Möglichkeit zur präzisen Steuerung der Spannung des Pressriemens zu nennen.

Vorteilhafterweise sind die Spannelemente der Spanneinheit sowohl absolut beweglich als auch relativ zueinander beweglich ausgeführt. Die absolute Beweglichkeit an der Rundballenpresse ermöglicht insbesondere eine Nachführung der Spannelemente bzw. der Spanneinheit insgesamt innerhalb des Innenraums, wodurch die räumliche Lage der Spanneinheit im Zuge der Volumenzunahme eines im Entstehen begriffenen Rundballens innerhalb des Gehäuses angepasst werden kann.

In einer bevorzugten Ausführungsform sind die beiden Spannelemente jeweils in Form von Schwenkarmen ausgebildet, wobei ein erster Schwenkarm unter Ausbildung eines Drehgelenks an einem Auflager des Gehäuses gelagert ist und der zweite Schwenkarm wiederum unter Ausbildung eines Drehgelenks unmittelbar an den ersten Schwenkarm angeschlossen ist. Bei dieser Ausführung ist die Spanneinheit mithin lediglich an einer Lagerstelle in Kraft übertragender Weise mit dem Gehäuse verbunden. Zudem sind die Spannelemente bzw. Schwenkarme unmittelbar gegeneinander abgestützt. Die Spanneinrichtung ist derart an die Schwenkarme angeschlossen, dass eine mittels ihr aufgebrachte Spannkraft unmittelbar entgegengesetzt auf die Schwenkarme wirkt. Bei dieser Ausführungsform findet ein Kraftfluss zwischen den Spannrollen der Spannelemente unmittelbar über die Schwenkarme, die Spanneinrichtung sowie die unmittelbare Anknüpfung des einen Schwenkarms an den anderen Schwenkarm statt. Eine Übertragung von Spannkräften ausgehend von dem ersten Schwenkarm über das Auflager an das Gehäuse der Rundballenpresse findet nicht statt. Die mittels der Spanneinrichtung bewirkte Spannkraft steht mithin in unmittelbarer Relation zu einer Zugspannung innerhalb des Pressriemens.

Alternativ zu der genannten Ausführungsform kann es weiterhin vorteilhaft sein, an dem Gehäuse der Rundballenpresse eine Führungseinrichtung auszubilden, in oder an derer zwei in Form von Schlitten ausgebildete Spannelemente beweglich gelagert sind. Bei dieser Ausführung sind die beiden Spannelemente nicht unmittelbar aneinander angeschlossen, sondern sind mittels der Spanneinrichtung aneinander gekoppelt, die sich zwischen den Spannelementen erstreckt und mit beiden in Kraft übertragender Weise verbunden ist. Auf diese Weise ist die Spanneinrichtung dazu geeignet, die beiden Spannelemente innerhalb bzw. an der Führungseinrichtung relativ zueinander zu arretieren. Vorteilhafterweise ist die Führungseinrichtung in sich gerade ausgebildet, wobei die Spanneinrichtung ferner parallel zu einer Längsachse der Führungseinrichtung ausgerichtet ist. Eine mittels der Spanneinrichtung aufgebrachte Spannkraft wirkt unmittelbar entgegengesetzt auf die beiden Spannelemente. Diese Ausführungsform der Spanneinheit ist besonders einfach umsetzbar und zudem innerhalb des Gehäuses der Rundballenpresse besonders einfach an das wachsende Volumen eines im Entstehen begriffenen Rundballens anpassbar. Insbesondere können die beiden als Schlitten ausgebildeten Spannelemente im Zuge des Anwachsens des Rundballens entlang der Führungseinrichtung axial bewegt werden. Die Veränderung des relativen Abstandes zwischen den Schlitten ist überdies besonders einfach möglich.

Die beschriebene Variante kann zudem dann von besonderem Vorteil sein, wenn die Spannelemente bezogen auf eine Längsachse der Führungseinrichtung zumindest im Hinblick auf die Anordnung der Spannrollen an den Spannelementen symmetrisch ausgebildet ist. Kombiniert mit einer Positionierung der Spanneinrichtung entlang der Längsachse der Führungseinrichtung hat dies zur Folge, dass die in der Spanneinrichtung wirkende Spannkraft besonders einfach in die in dem sich zwischen den Spannrollen erstreckenden Pressriemen wirkende Zugkraft übersetzbar ist. Die Steuerung der innerhalb des Pressriemens wirkenden Spannung ist bei dieser Ausführung mithin besonders einfach möglich.

### Ausführungsbeispiele

Das erfindungsgemäße Riemenspannsystem sowie die erfindungsgemäße Rundballenpresse werden nachstehend anhand von Ausführungsbeispielen, die in den Figuren dargestellt sind, näher erläutert. Es zeigt:
- Fig. 1:: Einen Querschnitt durch eine Rundballenpresse gemäß dem Stand der Technik,
- Fig. 2:: Eine schematische Darstellung eines im Querschnitt dargestellten erfindungsgemäßen Riemenspannsystems,
- Fig. 3:: Eine schematische Darstellung des Riemenspannsystems gemäß Figur 2 während eines anderen Zeitpunkts im Zuge der Erstellung eines Rundballens,
- Fig. 4:: Eine schematische Darstellung eines zweiten im Querschnitt dargestellten erfindungsgemäßen Riemenspannsystems und
- Fig. 5:: Eine schematische Darstellung des Riemenspannsystems gemäß Figur 4 während eines anderen Zeitpunkts im Zuge der Erstellung eines Rundballens.

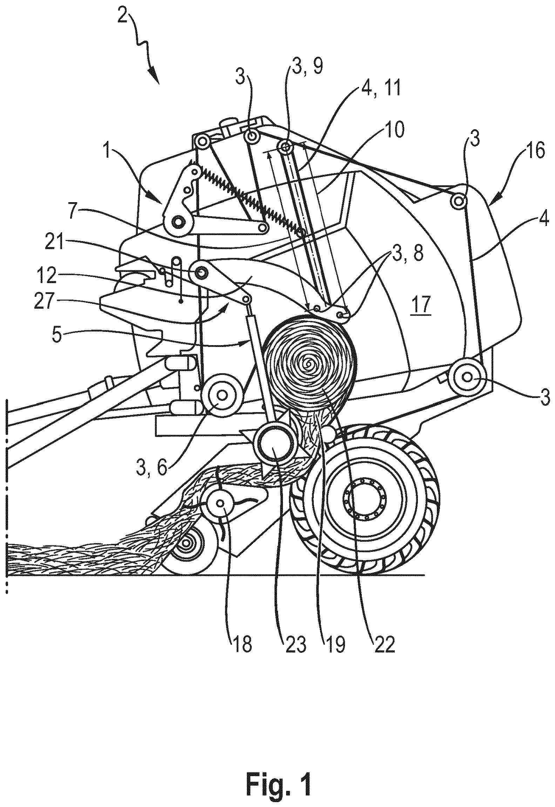

Ein bekanntes Beispiel, das in **Figur 1** dargestellt ist, umfasst eine Rundballenpresse **2** gemäß dem Stand der Technik. Diese umfasst wiederum ein Gehäuse **16,** das einen Innenraum **17** aufweist, sowie eine innerhalb des Innenraums **17** mittels eines Pressriemens **4** begrenzte Presskammer **20,** innerhalb derer in dem in **Figur 1** gezeigten Zustand gerade ein Rundballen **22** gepresst wird. Der Pressriemen **4** ist mittels einer Mehrzahl von Führungsrollen **3** innerhalb des Innenraums **17** geführt, wobei eine der Führungsrollen **3** als Antriebsrolle **6** ausgeführt ist. Auf diese Weise ist der endlos sowie in sich flache Pressriemen **4** fortlaufend um die Führungsrollen **3** bewegbar. Letztere erstrecken sich parallel zu einer Querrichtung der Rundballenpresse **2** zwischen einander gegenüberliegenden Seitenwandungen des Gehäuses 16 derselben.

Die bekannte Rundballenpresse **2** weist ferner eine Zuführeinrichtung **18** auf, die in Form einer rotierenden Welle ausgebildet ist. Diese ist mit vier sich radial ausgehend von einer äußeren Mantelfläche der Welle erstreckenden Förderelementen ausgestattet, sodass die Zuführeinrichtung **18** im Zuge ihrer Rotation Erntegut in Richtung des Innenraums **17** der Rundballenpresse **2** fördern kann. Hierbei wird das Erntegut durch einen Zuführkanal geführt, wobei in dem gezeigten Beispiel das Erntegut vor einem Übertritt von dem Zuführkanal in die Presskammer **20** mittels einer Schneideinrichtung **23** zerkleinert wird. Das Erntegut tritt schließlich durch einen Übertrittsquerschnitt **19** hindurch in die Presskammer **20** ein. Letztere ist nach unten hin durch den Übertrittsquerschnitt **19** sowie nach oben und zu den Seiten durch den Pressriemen **4** begrenzt.

Zur Regelung der Spannung des Pressriemens verfügt die Rundballenpresse **2** über eine Spanneinheit **27.** Diese umfasst ein Spannelement **12** in Form eines Schwenkarms, der um ein Drehgelenk **21** verschwenkbar gelagert ist. An einem der dem Drehgelenk **21** abgewandten Ende des Spannelements **12** verfügt die Spanneinheit **27** über zwei Spannrollen **8,** die gemeinsam ein Spannrollenpaar bilden. Diese sind im Zuge einer Verschwenkung des Spannelements **12** um dessen Drehgelenk **21** innerhalb des Innenraums **17** verlagerbar, sodass eine mittels der Spannrollen **8** bewirkte Umlenkstelle des Pressriemens **4** gleichermaßen verlagerbar ist. Die Spanneinheit **27** umfasst neben den Spannrollen **8** ferner über eine diesen zugeordnete weitere Spannrolle **9,** die beabstandet von den Stellrollen **8** angeordnet ist. Der Pressriemen **4** ist derart geführt, dass er sich ausgehend von der ersten Spannrolle **8** des an dem Spannelement **12** befindlichen Spannrollenpaares zu der Spannrolle **9** erstreckt, die hier ortsfest und unbeweglich an dem Gehäuse **16** der Rundballenpresse **2** angeordnet ist, und sodann von der Spannrolle **9** zu der zweiten Spannrolle **8** des Spannrollenpaares erstreckt. Die Spannrollen **8** des Spannelements **12** und die ortsfeste Spannrolle **9** befinden sich in einem Abstand **7** voneinander, der hier zumindest im Wesentlichen einer Länge **10** eines Laufstreckenabschnitts **11** des Pressriemens **4** zwischen den Spannrollen **8, 9** entspricht. Die Spanneinheit **27** umfasst weiterhin eine Spanneinrichtung **5,** die hier in Form einer Kolben-Zylinder-Einheit ausgebildet ist.

Im Zuge der Entstehung eines Rundballens **22** steigt dessen Volumen und damit das Volumen der Presskammer **20** sukzessive an, wodurch der Pressriemen **4** zunehmend ausgelenkt wird. Mit anderen Worten steigt eine Länge eines Laufstreckenabschnitts des Pressriemens **4,** der sich entlang des Rundballens **22** erstreckt, fortwährend während des Anwachsens des Rundballens **22** an. Aufgrund der in sich konstanten Gesamtlänge des in sich geschlossenen Pressriemens **4** führt die zunehmende Auslenkung desselben unweigerlich zu einer ansteigenden Zugspannung innerhalb des Pressriemens, da dieser eine Dehnungen erfährt. Das Ausmaß, mit dem das sich zwischen den Spannrollen **8, 9** erstreckende "Längenreservoir" des Pressriemens **4** freigegeben wird, wird schließlich mittels einer Spanneinrichtung **5** gesteuert. Mithin wird hierdurch mittelbar auch eine Steuerung der Spannung des Pressriemens **4** erzielt, wobei die Nachführung des Spannelement **12** mitsamt der zugehörigen Spannrollen **8** zudem an das Wachstum des Rundballens **22** angepasst werden muss, da die Spannrollen **8** sich gewissermaßen in unmittelbarem Kontakt mit dem Rundballen **22** befinden und diesen folglich "ausweichen" müssen.

Die ortsfeste Spannrolle **9** ist unmittelbar an dem Gehäuse **16** befestigt, sodass eine durch den Pressriemen **4** zwischen den Spannrollen **8, 9** übertragene Zugkraft über das Gehäuse **16** geleitet werden muss. Hierin ist ein erster Nachteil der bekannten Konstruktion zu sehen. Weiterhin ist eine präzise Steuerung der Spannung des Pressriemens **4** bei der bekannten Rundballenpresse **2** nicht möglich.

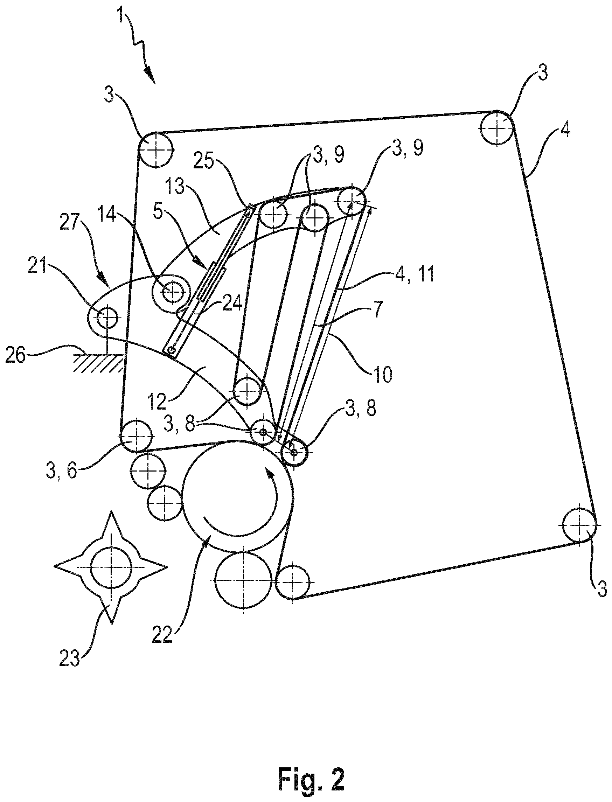

Ausführungsbeispiele des erfindungsgemäßen Riemenspannsystems sind in den nachfolgenden **Figuren 2 bis 5** dargestellt. Diese Riemenspannsysteme sind grundsätzlich auf landwirtschaftliche Rundballenpressen **2** anwendbar.

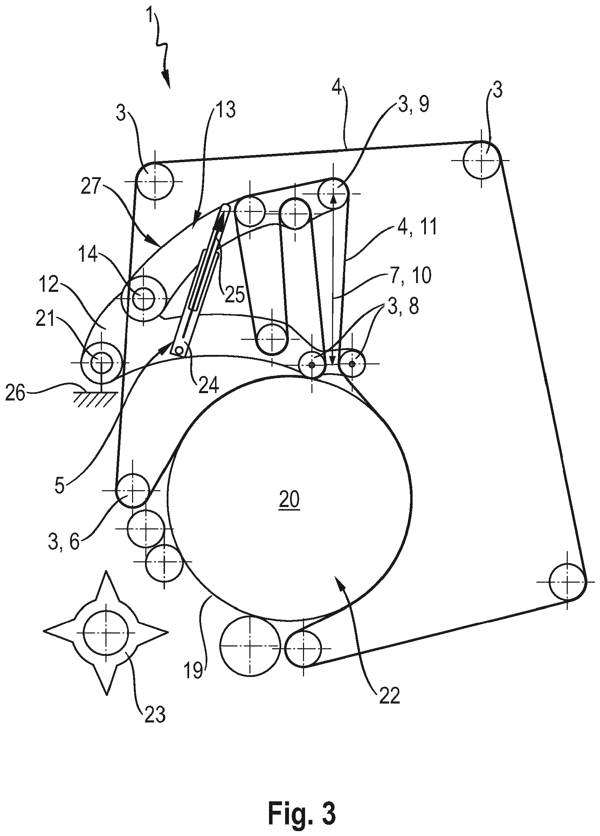

Die erste Ausführungsform, die in den **Figuren 2** **und** **3** dargestellt ist, umfasst ein erfindungsgemäßes Riemenspannsystem **1,** das eine Mehrzahl von Führungsrollen 3 sowie einen Pressriemen **4** aufweist. Die Führungsrollen **3** und in aller Regel ortsfest an einer jeweiligen Rundballenpresse **2** ausgebildet und dienen dazu, eine Laufstrecke des Pressriemens **4** "abzustecken". Der Pressriemen **4** wird an den Führungsrollen **3** umgelenkt, wodurch eine Laufstrecke definiert wird. Um den in sich geschlossenen Pressriemen **4** anzutreiben, ist eine der Laufrollen **3** als Antriebsrolle **6** ausgebildet.

Das erfindungsgemäße Riemenspannsystem **1** umfasst weiterhin eine Spanneinheit **27,** die zwei Spannelemente **12, 13** umfasst. Diese Spannelemente **12, 13** sind hier in Form von Schwenkarmen ausgeführt, wobei ein erster Schwenkarm mittels eines Drehgelenks **21** an einem Auflager **26** gelagert ist. Ein solches Auflager **26** kann beispielsweise an einem Gehäuse **16** einer Rundballenpresse **2** ausgeführt sein. Die drehgelenkige Anordnung des Spannelements **12** an dem Auflager **26** erlaubt eine freie Verdrehung des Spannelements **12** um das Auflager **26.** Das zweite Spannelement **13** ist seinerseits unmittelbar an dem ersten Spannelement **12** gelagert, wobei die Lagerung gleichermaßen mittels eines Drehgelenks **14** gelenkig ausgebildet ist. Auf diese Weise ist das zweite Spannelement **13** relativ zu dem ersten Spannelement **12** verschwenkbar gelagert. Beide Spannelemente **12, 13** wirken zudem unmittelbar mit einer Spanneinrichtung **5** zusammen, die hier in Form einer Kolben-Zylinder-Einheit ausgebildet ist und entsprechend einen Zylinder **24** sowie einen Kolben **25** umfasst. Die Spannelemente **12, 13** sind jeweils mit einer Mehrzahl von Führungsrollen **3** ausgestattet, die in einer Funktion als Spannrollen **8, 9** verwendet werden. Diese Funktion erlangen die Führungsrollen **3** dadurch, dass sie relativ zueinander beweglich gelagert sind, das heißt die Führungsrollen **3,** die an dem einen Spannelement **12** angeordnet sind, insgesamt relativ zu den Führungsrollen **3** beweglich sind, die an dem Spannelement **13** angeordnet sind. Aufgrund der gelenkigen Lagerung des ersten Spannelements **12** an dem Auflager **26** sind die Spannrollen **8, 9** zudem absolut im Raum beweglich und somit nicht ortsfest gelagert. Dies ist besonders gut anhand der Verlagerung der Spanneinheit **27** als Ganzes in den verschiedenen Zuständen des Riemenspannsystems **1** in den **Figuren 2** **und** **3** erkennbar.

Zwischen einander zugeordneten Spannrollen **8, 9** der beiden Spannelemente **12, 13** erstreckt sich ein Führungsstreckenabschnitt **11** des Spannriemens **4,** der je nach Relativstellung der Spannelemente **12, 13** eine bestimmte Länge **10** aufweist. Diese Länge **10** entspricht hier zumindest im Wesentlichen einem Abstand 7 zwischen den einander zugeordneten Spannrollen **8, 9.** Die Bewegung der beiden Spannelemente **12, 13** relativ zueinander wird unmittelbar mittels der Spanneinrichtung **5** gesteuert. Eine mittels der Spanneinrichtung **5** ausgeübte Druckkraft hat dabei zur Folge, dass die beiden Spannelemente **12, 13** sich voneinander weg bewegen und somit der Abstand **7** zwischen den einander zugeordneten Spannrollen **8, 9** und folglich die Länge **10** des Laufstreckenabschnitts **11** des Pressriemens **4** ansteigen. Umgekehrt führt ein Einfahren des Kolbens **25** in den Zylinder **24** der Spanneinrichtung **5** zu einer Bewegung der Spannrollen **8, 9** aufeinander zu.

Mittels des "Aufspreizens" der Spannelemente **12, 13** wird ein Längenanteil des Pressriemens **4,** der sich an bzw. entlang der Spanneinheit **27** erstreckt, vergrößert, wodurch analog ein Längenanteil des Pressriemens **4** außerhalb der Spanneinheit **27** verringert wird. Gemäß vorstehender Erläuterung im Zusammenhang mit der bekannten Rundballenpresse **2** kann dies dazu führen, dass der Pressriemen **4** gedehnt bzw. gestreckt wird, wodurch eine in dem Pressriemen **4** vorliegende Zugspannung erhöht werden kann. Da der Pressriemen **4** aufgrund der ortsfesten Anordnung der Führungsrollen **3** zum einen sowie aufgrund eines im Entstehen begriffenen Rundballens **22** zum anderen sich nicht frei bewegen kann, werden aufgrund der Dehnung des Pressriemens **4** zum einen Lagerkräfte der Führungsrollen 3 und zum anderen eine auf eine Umfangsfläche des Rundballens **22** wirkende Druckkraft ansteigen. Insbesondere letztere hat zur Folge, dass das innerhalb der Presskammer **20** befindliche Material stärker verdichtet wird.

Die Spanneinheit **27** ist erfindungsgemäß in sich geschlossen ausgebildet. Das heißt, dass die an dem Auflager **26** wirkende Lagerkraft unabhängig davon ist, welche Spannkraft innerhalb der Spanneinrichtung **5** wirkt und wie groß die Zugkraft bzw. Zugspannung innerhalb des Pressriemens **4** ist. Die Spanneinheit **27** befindet sich mithin in einem äußeren Kräftegleichgewicht, während ein Kraftfluss zwischen den Spannelementen **12, 13** unmittelbar über den Pressriemen **4,** die Spanneinrichtung **5** sowie die unmittelbare Verbindung der Spannelemente **12, 13** untereinander stattfindet. Auf diese Weise wird neben einer Entlastung des Auflager **26** bzw. eines zugehörigen Gehäuses **16** einer Rundballenpresse **2** ferner erreicht, dass Zugspannung des Pressriemens **4** in einen unmittelbaren Zusammenhang mit der Spannkraft der Spanneinrichtung **5** gesetzt werden kann. Auf diese Weise ist es mittels des erfindungsgemäßen Riemenspannsystems 1 möglich, die Spannung des Pressriemens **4** und mithin mittelbar die Dichte des zu erzeugenden Rundballen **22** präzise zu kontrollieren.

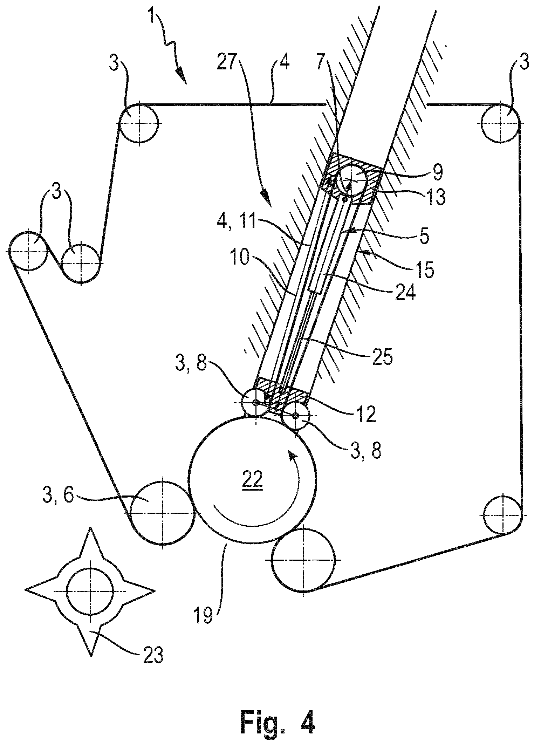

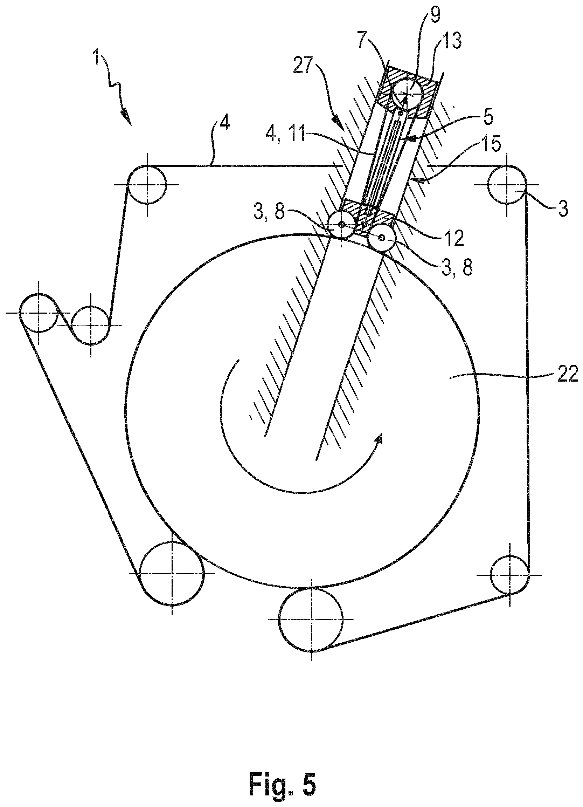

Ein alternatives Ausführungsbeispiel, das in den **Figuren 4** **und** **5** gezeigt ist, umfasst gleichermaßen eine Spanneinheit **27,** zwei Spannelemente **12, 13** sowie eine Führungseinrichtung **15** umfasst. Die Führungseinrichtung **15** ist hier in Form eines lang gestreckten, in sich geraten Führungskanals ausgebildet, in dem die in Form von Schlitten ausgebildeten Spannelemente **12, 13** axial beweglich gelagert sind. Auf diese Weise sind die Spannelemente **12, 13** jeweils sowohl absolut als auch relativ zueinander beweglich gelagert. Eine Verbindung der beiden Spannelemente **12, 13** erfolgt hier ausschließlich mittels der Spanneinrichtung **5,** deren Kolben **25** mit dem unteren Spannelement **12** und deren Zylinder **24** mit dem oberen Spannelement **13** zusammenwirken. Eine umgekehrte Anordnung der Spanneinrichtung 5 ist selbstverständlich ohne Weiteres denkbar. Das untere Spannelement **12** wirkt in dem gezeigten Beispiel mit zwei in Form von Spannrollen **8** ausgebildeten Führungsrollen **3** zusammen, während das obere Bewegungselement **13** eine Spannrolle **9** umfasst. Wie sich besonders gut anhand von **Figur 4** ergibt, bewirken eine erste der Spannrollen **8** eine Umlenkung des Pressriemens **4** in Richtung der Spannrolle **9** und die Spannrolle **9** schließlich eine Umlenkung des Pressriemens **4** zurück in Richtung der zweiten Spannrolle **8.**

Analog zu dem Ausführungsbeispiel gemäß **Figuren 2** **und** **3** ist eine Zugspannung des Pressriemens **4** mittels Änderung des Abstandes zwischen den Spannelementen **12, 13** einstellbar. Hierzu kann der Kolben **25** der Kolben-Zylinder-Einheit beispielsweise hydraulisch aus dem zugehörigen Zylinder **24** ausgefahren werden, wodurch ein Abstand **7** zwischen den Spannrollen **8, 9** vergrößert wird. Diese Vergrößerung kann sich grundsätzlich in einer kombinierten Bewegung der Spannelemente **12, 13** voneinander weg niederschlagen, da letztlich beide Spannelemente **12, 13** nicht ortsfest innerhalb des Führungskanals **15** gelagert sein müssen. Umgekehrt ist eine Reduktion des Abstandes **7** zwischen den Spannrollen **8, 9** selbstverständlich ebenso denkbar und ist im Zuge der Erstellung eines Rundballens **22** in aller Regel notwendig. Ein Ablauf dieses Vorgangs ergibt sich aus der Zusammenschau der **Figuren 4** **und** 5. In dem gezeigten Beispiel sind beide Spannelemente **12, 13** absolut innerhalb des Führungskanals beweglich ausgebildet.

Auch das zweite erfindungsgemäße Riemenspannsystem **1** bewirkt den besonderen Vorteil, dass die Spanneinheit **27** keine externen Lagerkräfte hervorruft, das heißt in einem äußeren Kräftegleichgewicht steht. Insbesondere wird die zwischen den Spannelementen **12, 13** aufgrund der in dem Pressriemen **4** wirkenden Zugspannung übertragene Kraft vollständig mittels der Spanneinrichtung **5** aufgefangen und unmittelbar zwischen den Spannelementen **12, 13** "rückgekoppelt". Das System aus den beiden Spannelemente **12, 13** und der Spanneinrichtung **5** befindet sich mithin in einem äußeren Kräftegleichgewicht.

Die gezeigte Ausführungsform bietet dabei den besonderen Vorteil, dass sie geometrisch besonders einfach gehalten ist. Dies hat zur Folge, dass die mittels der Spanneinrichtung **5** eingestellte Spannkraft, die in Form einer Druckkraft vorliegt, doppelt so groß ist, wie eine in den Pressriemen **4** vorliegende Zugkraft. In Kenntnis eines Querschnitts des Pressriemens **4** kann mithin eine Zugspannung desselben unmittelbar berechnet werden. Eine Einflussnahme auf die Dichte des zu erzeugenden Rundballens **22** ist folglich besonders einfach möglich. Weiterhin wird ein zugehöriges Gehäuse **16** einer jeweiligen Rundballenpresse frei von durch die Spanneinheit **27** bedingten Kräften gehalten. Ferner erlaubt die lineare Führung der Spannelemente **12, 13** innerhalb des Führungskanals **15** eine besonders einfache Nachführung der ersteren im Zuge des Anwachsens eines jeweils im Entstehen begriffenen Rundballens **22.**

### Bezugszeichenliste

- 1: Riemenspannsystem
- 2: Rundballenpresse
- 3: Führungsrolle
- 4: Pressriemen
- 5: Spanneinrichtung
- 6: Antriebsrolle
- 7: Abstand
- 8: Spannrolle
- 9: Spannrolle
- 10: Länge
- 11: Laufstreckenabschnitt
- 12: Spannelement
- 13: Spannelement
- 14: Drehgelenk
- 15: Führungseinrichtung
- 16: Gehäuse
- 17: Innenraum
- 18: Zuführeinrichtung
- 19: Übertrittsquerschnitt
- 20: Presskammer
- 21: Drehgelenk
- 22: Rundballen
- 23: Schneideinrichtung
- 24: Zylinder
- 25: Kolben
- 26: Auflager
- 27: Spanneinheit

## Patentansprüche

1. Riemenspannsystem (1) für eine landwirtschaftliche Rundballenpresse (2), umfassend
- eine Mehrzahl von parallel zueinander orientierten Führungsrollen (3), die beabstandet voneinander angeordnet sind,
- einen Pressriemen (4), der in Form eines Endlosriemens ausgebildet ist und um die Führungsrollen (3) gelegt ist, sowie
- mindestens eine Spanneinrichtung (5), mittels derer der Pressriemen (4) spannbar ist,
wobei mindestens eine der Führungsrollen (3) in Form einer Antriebsrolle (6) ausgebildet ist, mittels derer der Pressriemen (4) antreibbar ist,
wobei die Führungsrollen (3) gemeinsam eine Laufstrecke abstecken, entlang derer der Pressriemen (4) fortwährend umlaufen kann,
wobei mittels der Spanneinrichtung (5) ein Abstand (7) zwischen zumindest zwei als Spannrollen (8, 9) fungierenden Führungsrollen (3) veränderbar ist, sodass eine Länge (10) eines Laufstreckenabschnitts (11) des Pressriemens (4), der sich zwischen den Spannrollen (8, 9) erstreckt, veränderbar ist,
**gekennzeichnet durch**
eine in sich geschlossene Spanneinheit (27), die mindestens zwei gegeneinander abgestützte sowie relativ zueinander bewegliche Spannelemente (12, 13) umfasst, die jeweils mindestens eine Spannrolle (8, 9) aufweisen,
wobei die Spannelemente (12, 13) jeweils derart mit der Spanneinrichtung (5) zusammenwirken, das eine mittels der Spanneinrichtung (5) ausgeübte Spannkraft entgegengesetzt auf die Spannelemente (12, 13) wirkt,
wobei die Spanneinheit (27) als solche unabhängig von der Spannkraft der Spanneinrichtung (5) in einem äußeren Kräftegleichgewicht steht.

2. Riemenspannsystem (1) nach Anspruch 1, **dadurch gekennzeichnet, dass** die Spannelemente (12, 13) sowohl jeweils absolut als auch relativ zueinander beweglich sind.

3. Riemenspannsystem (1) nach Anspruch 1 oder 2, **dadurch gekennzeichnet, dass** die Spannelemente (12, 13) jeweils unmittelbar mit der Spanneinrichtung (5) verbunden sind, insbesondere ein Ende der Spanneinrichtung (5) mit einem ersten Spannelement (12) und das gegenüberliegende Ende der Spanneinrichtung (5) mit dem zweiten Spannelement (13) verbunden sind.

4. Riemenspannsystem (1) nach einem der Ansprüche 1 bis 3, **dadurch gekennzeichnet, dass** die Spannelemente (12, 13) jeweils in Form von Schwenkarmen ausgebildet sind, die unmittelbar unter Ausbildung eines Drehgelenks (14) miteinander verbunden sind, wobei eine Drehposition der Spannelemente (12, 13) relativ zueinander mittels der Spanneinrichtung (5) arretierbar ist.

5. Riemenspannsystem (1) nach einem der Ansprüche 1 bis 3, **dadurch gekennzeichnet, dass** die Spannelemente (12, 13) jeweils in Form von Schlitten ausgeführt sind, die in oder an einer Führungseinrichtung (15) angeordnet sind, wobei eine Relativposition der Spannelemente (12, 13) in oder an der Führungseinrichtung (15) mittels der Spanneinrichtung (5) arretierbar ist.

6. Riemenspannsystem (1) nach einem der Ansprüche 1 bis 5, **dadurch gekennzeichnet, dass** zumindest an einem der Spannelemente (12, 13) zwei Spannrollen (8, 9) angeordnet sind, die gemeinsam ein Spannrollenpaar bilden.

7. Riemenspannsystem (1) nach einem der Ansprüche 1 bis 6, **dadurch gekennzeichnet, dass** die Spanneinrichtung (5) von einer Kolben-Zylinder-Einheit gebildet ist.

8. Landwirtschaftliche Rundballenpresse (2), insbesondere zum Pressen halmartigen Ernteguts zu Rundballen, umfassend
- einen von einem Gehäuse (16) eingefassten Innenraum (17),
- eine Zuführeinrichtung (18), mittels derer Erntegut durch einen Übertrittsquerschnitt (19) hindurch dem Innenraum (17) zuführbar ist,
wobei ein Pressriemen (4) entlang seiner Laufstrecke eine Presskammer (20) aufspannt, die mit dem Übertrittsquerschnitt (19) zusammenwirkt, sodass mittels der Zuführeinrichtung (18) in den Innenraum (17) geführtes Erntegut in die Presskammer (20) gelangt, und einem Riemenspannsystem (1) gemäß Anspruch 1, sodass das Gehäuse (16) frei von mittels einer Spanneinrichtung (5) erzeugter Spannkräfte ist.

9. Rundballenpresse (2) nach Anspruch 8, **dadurch gekennzeichnet, dass** ein erstes Spannelement (12) in Form eines ersten Schwenkarms gebildet ist, der unter Ausbildung eines Drehgelenks (21) an dem Gehäuse (16) der Rundballenpresse (2) gelagert ist, wobei ein zweites Spannelement (13), das in Form eines zweien Schwenkarms gebildet ist, unter Ausbildung eines Drehgelenks (14) an den ersten Schwenkarm angeschlossen ist, wobei die Spanneinrichtung (5) derart auf die beiden Spannelemente (12, 13) wirkt, dass eine mittels der Spanneinrichtung (5) aufgebrachte Spannkraft unmittelbar entgegengesetzt auf die beiden Spannelemente (12, 13) wirkt.

10. Rundballenpresse (2) nach einem der Ansprüche 8 oder 9, **gekennzeichnet durch** eine an dem Gehäuse (16) ausgebildete Führungseinrichtung (15), in oder an derer in Form von Schlitten ausgebildeten Spannelemente (12, 13) beweglich gelagert sind, wobei die Spanneinrichtung (5) derart mit beiden Spannelementen (12, 13) verbunden ist, dass eine mittels der Spanneinrichtung (5) aufgebrachte Spannkraft unmittelbar entgegengesetzt auf die beiden Spannelemente (12, 13) wirkt.

## Claims

1. A belt tensioning system (1) for an agricultural round baler (2), comprising:
- a plurality of guide rollers (3) which are parallel in orientation with respect to each other and separated from each other,
- a baler belt (4) which is configured in the form of an endless belt and which is positioned around the guide rollers (3), as well as
- at least one tensioning device (5) by means of which the baler belt (4) can be put under tension,
wherein at least one of the guide rollers (3) is configured in the form of a drive roller (6) by means of which the baler belt (4) can be driven,
wherein the guide rollers (3) together define a run path around which the baler belt (4) can run continuously, wherein, by means of the tensioning device (5), a distance (7) between at least two guide rollers (3) functioning as tensioning rollers (8, 9) can be varied, so that a length (10) of a section (11) of the run path of the baler belt (4) which extends between the tensioning rollers (8, 9) can be varied,
**characterized by**
a self-contained tensioning unit (27) which has at least two tensioning elements (12, 13) which are supported against each other as well as movable relative to each other, which each have at least one tensioning roller (8, 9),
wherein the tensioning elements (12, 13) respectively cooperate with the tensioning device (5) in a manner such that a tensile force exerted by means of the tensioning device (5) acts in the opposite direction to the tensioning elements (12, 13),
wherein the tensioning unit (27) per se is independent of the tensile force of the tensioning device (5) in an external balance of forces.

2. The belt tensioning system (1) according to claim 1, **characterized in that** the tensioning elements (12, 13) are respectively movable both absolutely as well as relative to each other.

3. The belt tensioning system (1) according to claim 1 or claim 2, **characterized in that** the tensioning elements (12, 13) are respectively directly connected to the tensioning device (5), and in particular, one end of the tensioning device (5) is connected to a first tensioning element (12) and the opposite end of the tensioning device (5) is connected to the second tensioning element (13).

4. The belt tensioning system (1) according to one of claims 1 to 3, **characterized in that** the tensioning elements (12, 13) are respectively in the form of pivot arms which are directly connected together with the formation of a pivot joint (14), wherein a rotational position of the tensioning elements (12, 13) relative to each other can be locked by means of the tensioning device (5).

5. The belt tensioning system (1) according to one of claims 1 to 3, **characterized in that** the tensioning elements (12, 13) are respectively in the form of carriages which are disposed in or on a guide device (15), wherein a relative position of the tensioning elements (12, 13) in or on the guide device (15) can be locked by means of the tensioning device (5).

6. The belt tensioning system (1) according to one of claims 1 to 5, **characterized in that** two tensioning rollers (8, 9) are disposed on at least one of the tensioning elements (12, 13) and which together form a pair of tensioning rollers.

7. The belt tensioning system (1) according to one of claims 1 to 6, **characterized in that** the tensioning device (5) is formed by a piston and cylinder unit.

8. An agricultural round baler (1), in particular for baling stalk-like harvested material into round bales (2), comprising:
- an interior space (17) surrounded by a housing (16),
- a feeding device (18), by means of which harvested material can be fed to the interior space (17) through a transfer cross section (19),
wherein along its run path, a baler belt (4) sets up a bale chamber (20) which cooperates with the transfer cross section (19) so that harvested material guided into the interior space (17) by means of the feeding device (18) enters the bale chamber (20), and which cooperates with a belt tensioning system (1) according to claim 1, so that the housing (16) is free from tensile forces produced by means of a tensioning device (5).

9. The round baler (2) according to claim 8, **characterized in that** a first tensioning element (12) is formed in the form of a first pivot arm which is mounted on the housing (16) of the round baler (2) with the formation of a pivot joint (21), wherein a second tensioning element (13) which is in the form of a second pivot arm is attached to the first pivot arm with the formation of a pivot joint (14), wherein the tensioning device (5) acts on the two tensioning elements (12, 13) in a manner such that a tensile force applied by means of the tensioning device (5) acts in the opposite direction to the two tensioning elements (12, 13).

10. The round baler (2) according to claim 8 or claim 9, **characterized by** a guide device (15) formed on the housing (16), in or on which tensioning elements (12, 13) in the form of carriages are movably mounted, wherein the tensioning device (5) is connected to the two tensioning elements (12, 13) in a manner such that a tensile force applied by means of the tensioning device (5) acts in the opposite direction to the two tensioning elements (12, 13).

## Revendications

1. Système de tension de courroie (1) pour une presse agricole à balles rondes (2) incluant
- une pluralité de rouleaux de guidage (3) orientés parallèlement les uns aux autres et disposés à distance les uns des autres,
- une courroie de pressage (4) qui est conçue sous la forme d'une courroie sans fin et passe autour des rouleaux de guidage (3), ainsi que
- au moins un équipement de tension (5) au moyen duquel la courroie de pressage (4) peut être tendue,
au moins un des rouleaux de guidage (3) étant conçu sous la forme d'un rouleau d'entraînement (6) au moyen duquel la courroie de pressage (4) peut être entraînée,
les rouleaux de guidage (3) délimitant ensemble un trajet le long duquel la courroie de pressage (4) peut circuler en continu,
une distance (7) entre au moins deux rouleaux de guidage (3) faisant fonction de rouleaux de tension (8, 9) étant modifiable au moyen de l'équipement de tension (5), ce qui permet de modifier une longueur (10) d'une portion de trajet (11) de la courroie de pressage (4) qui s'étend entre les rouleaux de tension (8, 9), **caractérisé par**
une unité de tension fermée en soi (27) qui inclut au moins deux éléments de tension (12, 13) qui prennent appui l'un sur l'autre et sont mobiles l'un par rapport à l'autre et qui comportent respectivement au moins un rouleau de tension (8, 9),
les éléments de tension (12, 13) coopérant respectivement avec l'équipement de tension (5) de façon qu'une force de tension exercée au moyen de l'équipement de tension (5) agisse sur les éléments de tension (12, 13) dans des directions opposées,
l'unité de tension (27) en tant que telle se trouvant dans un équilibre de forces extérieures indépendamment de la force de tension de l'équipement de tension (5).

2. Système de tension de courroie (1) selon la revendication 1, **caractérisé en ce que** les éléments de tension (12, 13) sont mobiles aussi bien respectivement de manière absolue que de manière relative l'un par rapport à l'autre.

3. Système de tension de courroie (1) selon la revendication 1 ou 2, **caractérisé en ce que** les éléments de tension (12, 13) sont reliés respectivement directement à l'équipement de tension (5), en particulier une extrémité de l'équipement de tension (5) est reliée à un premier élément de tension (12) et l'extrémité opposée de l'équipement de tension (5) est reliée au second élément de tension (13).

4. Système de tension de courroie (1) selon une des revendications 1 à 3, **caractérisé en ce que** les éléments de tension (12, 13) sont conçus respectivement sous la forme de bras pivotants qui sont reliés directement entre eux en formant une articulation tournante (14), une position de rotation des éléments de tension (12, 13) l'un par rapport à l'autre pouvant être bloquée au moyen de l'équipement de tension (5).

5. Système de tension de courroie (1) selon une des revendications 1 à 3, **caractérisé en ce que** les éléments de tension (12, 13) sont conçus respectivement sous la forme de chariots qui sont disposés dans ou contre un équipement de guidage (15), une position relative des éléments de tension (12, 13) dans ou contre l'équipement de guidage (15) pouvant être bloquée au moyen de l'équipement de tension (5).

6. Système de tension de courroie (1) selon une des revendications 1 à 5, **caractérisé en ce qu'**au moins contre un des éléments de tension (12, 13) sont disposés deux rouleaux de tension (8, 9) qui forment ensemble une paire de rouleaux de tension.

7. Système de tension de courroie (1) selon une des revendications 1 à 6, **caractérisé en ce que** l'équipement de tension (5) est formé par une unité piston-cylindre.

8. Presse agricole à balles rondes (2), en particulier pour le pressage en balles rondes de produit récolté sous forme de tiges, incluant
- un espace intérieur (17) entouré par un carter (16) ,
- un équipement d'amenée (18) au moyen duquel le produit récolté peut être amené à l'espace intérieur (17) en traversant une section transversale de passage (19),
une courroie de pressage (4) définissant le long de son trajet une chambre de pressage (20) qui coopère avec la section transversale de passage (19), de sorte que du produit récolté guidé jusque dans l'espace intérieur (17) au moyen de l'équipement d'amenée (18) pénètre dans la chambre de pressage (20), et un système de tension de courroie (1) selon la revendication 1, de sorte que le carter (16) est exempt de forces de tension générées au moyen d'un équipement de tension (5).

9. Presse à balles rondes (2) selon la revendication 8, **caractérisée en ce qu'**un premier élément de tension (12) est conçu sous la forme d'un premier bras pivotant qui prend appui sur le carter (16) de la presse à balles rondes (2) en formant une articulation tournante (21), un second élément de tension (13), qui est conçu sous la forme d'un second bras pivotant, étant relié au premier bras pivotant en formant une articulation tournante (14), l'équipement de tension (5) agissant sur les deux éléments de tension (12, 13) de façon qu'une force de tension exercée au moyen de l'équipement de tension (5) agisse directement sur les deux éléments de tension (12, 13) dans des directions opposées.

10. Presse à balles rondes (2) selon une des revendications 8 ou 9, **caractérisée par** un équipement de guidage (15) qui est conçu sur le carter (16) et dans ou contre lequel des éléments de tension (12, 13) conçus sous la forme de chariots sont montés de façon mobile, l'équipement de tension (5) étant relié aux deux éléments de tension (12, 13) de façon qu'une force de tension exercée au moyen de l'équipement de tension (5) agisse directement sur les deux éléments de tension (12, 13) dans des directions opposées.
